Europäisches Patentamt

(19) European Patent Office

Office européen des brevets

(11) Numéro de publication : **0 175 164**
**B1**

(12) # FASCICULE DE BREVET EUROPÉEN

(45) Date de publication du fascicule du brevet :
11.01.89

(51) Int. Cl.⁴ : **B 24 B 49/04**, G 01 B 3/00

(21) Numéro de dépôt : 85110559.3

(22) Date de dépôt : 22.08.85

(54) Dispositif pour mesurer la position axiale d'une pièce à usiner sur une machine-outil, notamment sur une machine à rectifier les surfaces cylindriques extérieures.

(30) Priorité : 27.08.84 FR 8413325

(43) Date de publication de la demande :
26.03.86 Bulletin 86/13

(45) Mention de la délivrance du brevet :
11.01.89 Bulletin 89/02

(84) Etats contractants désignés :
CH DE GB IT LI

(56) Documents cités :
EP--A-- 0 093 299
DE--A-- 3 151 883
DE--B-- 1 184 972
FR--A-- 2 178 891
FR--A-- 2 199 110
US--A-- 2 955 391
US--A-- 3 742 610

(73) Titulaire : MESELTRON S.A.
Avenue Beauregard 14/18
CH-2035 Corcelles (CH)

(72) Inventeur : Sigg, Hans
Charmettes 15
CH-2006 Neuchâtel (CH)

(74) Mandataire : Barbeaux, Bernard et al
ICB Ingénieurs Conseils en Brevets SA Passage
Max. Meuron 6
CH-2001 Neuchâtel (CH)

Jouve, 18, rue St-Denis, 75001 Paris, France

## Description

La présente invention a pour objet un dispositif pour mesurer la position axiale de pièces à usiner sur une machine-outil et plus particulièrement sur une machine à rectifier les surfaces cylindriques extérieures.

Plus précisément l'invention a trait à un dispositif comprenant une touche de mesure dont une extrémité est destinée à être amenée en contact avec des épaulements des pièces à usiner, des moyens pour supporter la touche de mesure de façon qu'elle puisse se déplacer en rotation ou en translation dans un plan, un ressort dont une première extrémité est fixée à un point d'ancrage et dont une seconde extrémité est liée à de la touche, pour exercer sur cette dernière une force de mesure dans ce plan, et un capteur pour mesurer les déplacements de cette touche.

Des dispositifs de ce genre, dont il est question, par exemple, dans DE-C-1 577 485 et DE-C-2 853 315, sont utilisés depuis longtemps, que ce soit pour seulement positionner manuellement ou automatiquement une pièce par rapport à la meule d'une machine à rectifier, ou pour contrôler avec précision l'enlèvement d'une surépaisseur au niveau d'un épaulement, ou bien encore pour pouvoir combiner un positionnement axial automatique de la pièce avec une rectification par autocalibrage de longueurs et/ou de diamètres.

Tels qu'ils sont réalisés actuellement, ces dispositifs présentent un inconvénient. En effet, comme le ressort qui crée la force de mesure est simplement fixé à un boîtier ou à un bâti, les mesures ne peuvent être faites qu'en déplaçant toujours la touche d'un même côté par rapport à sa position de repos, c'est-à-dire celle qu'elle occupe en dehors des périodes ou des mesures sont effectuées. Or, selon l'utilisation qui en est faite et selon la forme de la pièce à usiner, un dispositif peut tout aussi bien être amené, sur la même machine, à venir toucher des épaulements orientés vers un côté de cette dernière que des épaulements orientés vers l'autre. Par conséquent, chaque fois que deux mesures successives doivent être faites en appuyant la touche contre des épaulements de la même pièce ou de pièces différentes orientés en sens contraire, il faut démonter le dispositif de mesure, le tourner et le remonter.

DE-C-1 577 485 suggère une solution qui permet d'éviter cela. Il s'agit de prévoir non pas un seul ressort mais deux qui sont placés de part et d'autre de la touche de mesure et qui, lorsque le dispositif n'est pas utilisé, maintiennent cette touche dans une position médiane. Cette solution présente un autre inconvénient : la force de mesure est indéterminée pour la position médiane et pour qu'une force de mesure commence à s'établir il faut que la touche soit déjà inclinée d'un certain angle dans un sens ou dans l'autre par rapport à cette position médiane, ce qui fait que la position de référence pour les mesures (le « zéro ») n'est pas la même pour les deux sens.

Ceci oblige pratiquement à prévoir deux capteurs de mesure, un pour chaque sens, et complique l'appareillage qui doit être associé au dispositif de mesure pour traiter et exploiter les informations fournies par celui-ci.

Enfin, d'une manière générale, les dispositifs connus doivent dans de nombreux cas être munis de systèmes hydrauliques, pneumatiques, électriques ou manuels de relevage de la touche de mesure afin que ni elle, ni la pièce à usiner ne puisse être endommagée par collision lorsque ces dispositifs sont amenés en position de travail, ce qui complique leur mise au point et leur fabrication et augmente leur prix de revient.

La présente invention a pour but de fournir une solution qui permette de résoudre de manière simple ces différents problèmes.

Ce but est atteint grâce au fait que le dispositif selon l'invention comporte des moyens qui permettent de déplacer le point d'ancrage du ressort entre deux positions extrêmes sensiblement symétriques par rapport à un plan perpendiculaire à celui dans lequel se déplace la touche et que le ressort est lié à cette touche de manière à pouvoir suivre ce déplacement afin que le sens de la force de mesure qui est exercée sur elle par le ressort puisse être inversé.

Ainsi, le dispositif permet d'effectuer des mesures en amenant sa touche en contact avec des épaulements de pièce (s) orientés en sens contraire sans avoir besoin d'être tourné lorsqu'il est monté sur une machine.

D'une manière générale dans le dispositif selon l'invention, la touche de mesure est de préférence portée par un axe qui est situé dans le plan de symétrie des positions extrêmes qu'elle peut occuper et qui est lui aussi perpendiculaire au plan dans lequel elle se déplace.

D'autre part, dans un mode préféré d'exécution la seconde extrémité du ressort est accrochée à la touche de mesure de façon que le ressort puisse tourner autour d'un point d'accrochage sur la touche et les moyens qui permettent d'inverser le sens de la force de mesure comprennent une manivelle munie d'un maneton sur lequel se trouve le point d'ancrage du ressort et un système d'entraînement, de préférence un moteur électrique réversible et un démultiplicateur, pour faire pivoter la manivelle d'un angle d'environ 180° autour d'un axe situé dans le plan de symétrie et sensiblement parallèle à celui dans lequel la touche se déplace, entre deux positions extrêmes qui correspondent à celles du point d'ancrage du ressort.

D'autres caractéristiques et avantages de l'invention apparaîtront à la lecture de la description qui suit de ce mode préféré d'exécution, description faite en référence au dessin annexé sur lequel :

- la figure 1 est une vue schématique, en coupe longitudinale, du dispositif, et
- la figure 2 est une vue en coupe partielle suivant le plan II-II de la figure 1.

Tel qu'il est représenté sur les figures, le dispositif de mesure selon l'invention comprend un boîtier 1 en forme de parallélépipède droit, avec une face avant $1_a$ munie d'une ouverture centrale 2 par laquelle sort une touche de mesure 3 en forme de barrette, une face arrière $1_b$, quatre faces latérales $1_c$ à $1_f$ et un soufflet en matériau élastique 4, placé autour de la touche 3 et recouvrant l'ouverture 2 pour protéger l'intérieur du boîtier contre la poussière, les particules de métal, éventuellement les projections de liquides de refroidissement, etc.

La touche de mesure 3 est montée à rotation autour d'un axe X interne au boîtier au moyen d'un palier à lames élastiques croisées 5 placé dans sa partie centrale, l'axe X étant à la fois proche de la face avant $1_a$, perpendiculaire aux faces latérales opposées $1_c$ et $1_e$ et situé dans un plan de symétrie P du boîtier.

Par ailleurs, cette touche 3 présente deux garnitures 6 en matériaux résistant à l'usure, disposées de part et d'autre de son extrémité externe au boîtier et au niveau desquelles s'établit le contact entre le dispositif de mesure et la pièce à usiner, l'une de ces garnitures étant prévue pour le cas de l'approche d'un épaulement par la gauche et l'autre pour l'approche d'un épaulement par la droite.

A l'extrémité interne de la touche 3 est accroché par l'une de ses extrémités un ressort à boudin 7 dont l'autre extrémité est également accrochée ou fixée d'une autre manière au bout du maneton 9 d'une manivelle 8 dont le bras 10 est situé en arrière de la touche, le maneton 9 étant dirigé vers la face avant $1_a$ du boîtier.

D'autre part, le bras 10 de la manivelle est solidaire de l'arbre de sortie 14 d'un ensemble 11 formé d'un moteur électrique réversible 12 et d'un démultiplicateur 13, qui est monté sur la face arrière $1_b$ du boîtier et qui permet de faire pivoter cette manivelle d'un angle de 180° ou à peu près, autour d'un axe Y situé dans le plan de symétrie P et sensiblement perpendiculaire à l'axe X de rotation de la touche, entre deux positions extrêmes symétriques par rapport à ce plan et qui sont déterminées par deux butées 15 et 16 fixées au fond du boîtier.

Naturellement, la manière dont est accroché le ressort 7 à la touche de mesure est telle qu'il puisse tourner aisément autour de celle-ci. De plus, pour faciliter cette rotation il est préférable de dimensionner et de disposer la manivelle 8 de façon que le point d'ancrage du ressort sur le maneton 9 et son point d'accrochage sur la touche se trouvent dans un plan à peu près parallèle aux faces avant et arrière du boîtier. Toutefois ceci n'est pas une obligation.

Enfin, le dispositif comprend aussi, bien entendu, un capteur de mesure de longueur 17, par exemple de type capacitif ou inductif, pour produire et délivrer sur un câble de liaison 19 un signal électrique dont l'amplitude est représentative de, et de préférence sensiblement proportionnelle à, l'inclinaison de la touche 3 par rapport à une position de référence. Ce capteur 17 dont la tige de transmission 18 vient s'appuyer contre la touche en un point situé entre l'extrémité interne de cette dernière et le palier à lames croisées 5 a été représenté sur les figures comme étant fixé sur la paroi latérale $1_f$ du boîtier mais il pourrait tout aussi bien être porté par la paroi opposée $1_d$.

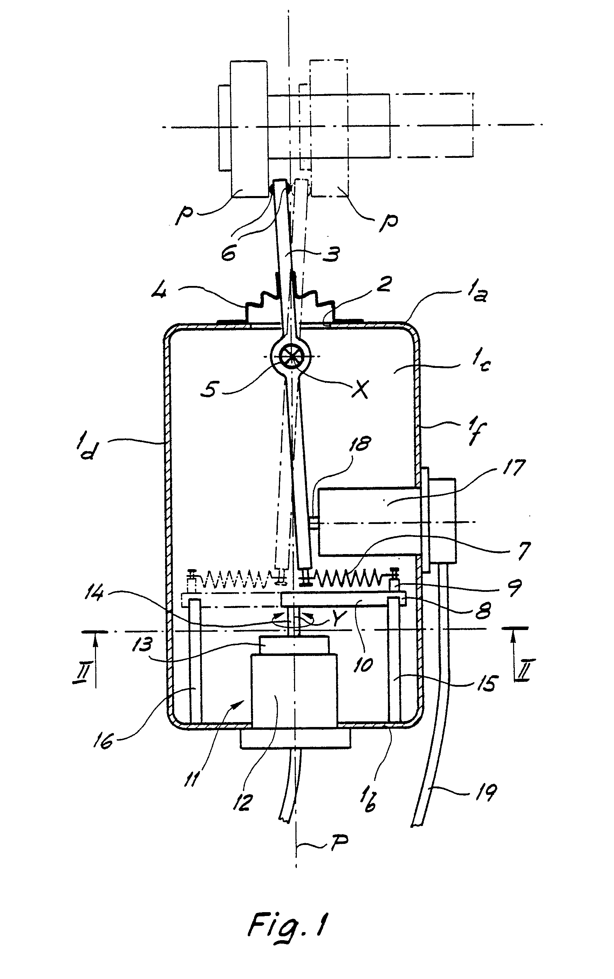

Comme le font apparaître les figures où la manivelle 8 et le ressort 7 sont représentés dans leurs positions extrêmes, pour l'une en traits pleins et pour l'autre en traitillés, et plus particulièrement la figure 1, le dispositif est conçu de façon que, lorsque la manivelle et le ressort se trouvent dans l'une ou l'autre de ces positions et lorsque la touche de mesure 3 est au repos, c'est-à-dire soumise à aucune force extérieure au dispositif mais seulement à celles exercées, d'une part, par le ressort et, d'autre part, par le soufflet 4, le palier 5 et la tige de transmission 18 du capteur de mesure 17, cette touche soit inclinée d'un certain angle, faible, par rapport au plan de symétrie P, dans la direction pour laquelle les deux extrémités du ressort se trouvent du même côté de ce plan.

Vu les longueurs que le dispositif pourra être amené à mesurer, le plus souvent il suffira de choisir pour cet angle une valeur comprise entre 1° et 3°, par exemple égale à 1,5° ou 2°.

D'ores et déjà, il apparaît que, tel qu'il a été décrit jusqu'à présent, le dispositif de mesure selon l'invention permet bien de résoudre les différents problèmes que posent les dispositifs connus.

En effet, comme l'illustre la figure 1 qui montre dans deux positions différentes une pièce à usiner p avec deux épaulements orientés en sens contraire et où la touche de mesure 3 est représentée, comme la manivelle et le ressort, dans ses deux positions extrêmes, il suffit de placer la manivelle dans l'une ou l'autre de ses positions limites pour pouvoir procéder à une mesure en venant toucher un épaulement à droite ou un épaulement à gauche.

Par ailleurs, il est possible d'avoir toujours le même zéro pour les mesures en choisissant comme position de référence pour la touche sa position médiane, c'est-à-dire celle pour laquelle elle est alignée avec le plan de symétrie P.

De plus, il est facile d'éviter des collisions entre le dispositif et la pièce en commençant par placer la manivelle dans la position opposée à celle qu'elle devra occuper au moment de la mesure, ceci lorsque le dispositif est dans sa position de repos ou de retrait, en amenant ensuite le dispositif en position de travail et, enfin, en faisant pivoter la manivelle de 180° pour que l'extrémité de la touche vienne doucement en contact avec la pièce. De même, après une mesure, il est possible d'éloigner la touche de la pièce en faisant changer la manivelle de position, avant de ramener le dispositif en position de repos pour éviter que ce dernier et/ou la pièce soit endommagé à ce moment-là.

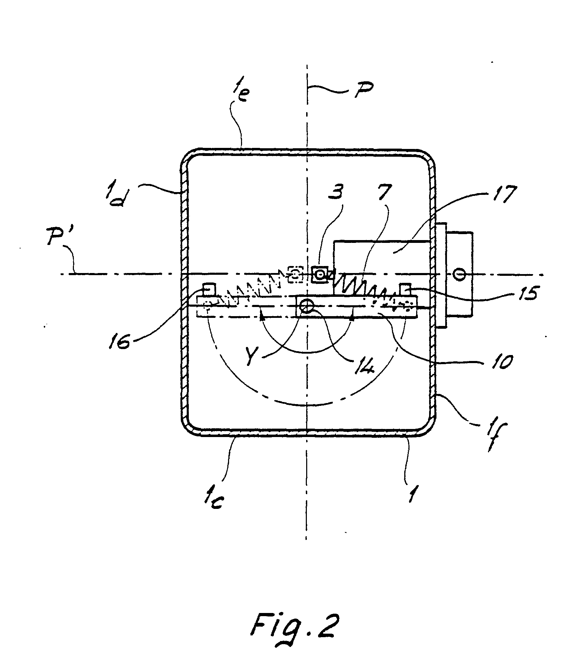

Toutefois, il convient de signaler une autre caractéristique intéressante du dispositif de mesure qui est décrit ici. Cette caractéristique est visible sur la figure 2. Il s'agit du fait que l'axe Y de pivotement de la manivelle 8 est décalé latéralement par rapport au plan P' dans lequel se déplace la touche 3 et ceci de façon que les butées 15 et 16 se trouvent entre la manivelle et ce plan. Ainsi, lorsque cette manivelle occupe l'une ou l'autre de ses positions extrêmes, le ressort 7 exerce sur le maneton 9 une force formée de deux composantes, l'une parallèle au bras 10 qui est annulée par une réaction de l'arbre 14 du système d'entraînement mais qui se retrouve, en sens inverse, au niveau du point d'accrochage du ressort sur la touche pour constituer la force de mesure et l'autre perpendiculaire au plan P', qui permet de maintenir la manivelle appliquée contre la butée 15 ou 16 correspondante, même si le moteur n'est pas alimenté et même si le dispositif est soumis à des vibrations. Il n'y a donc besoin de faire fonctionner le moteur 12 que pour changer la manivelle de position.

A noter que ce qui vient d'être dit à propos de la force exercée par le ressort n'est exact qu'à condition que celui-ci soit disposé parallèlement aux faces avant et arrière du boîtier. Si tel n'était pas le cas il existerait une troisième composante qui ne serait d'aucune utilité. Une telle disposition du ressort ne permet donc pas seulement de faciliter sa rotation autour de la touche mais aussi d'utiliser au mieux la force qu'il peut fournir.

Enfin, il est clair que l'invention n'est pas limitée à la forme de réalisation qui vient d'être décrite.

Par exemple la touche de mesure et le boîtier peuvent avoir d'autres formes.

Par ailleurs, le choix d'un palier à lames croisées comme moyen d'articulation de la touche est dû au fait qu'un tel système permet pratiquement d'éliminer toute force de frottement qui pourrait provoquer des déformations temporaires et même permanentes de la touche et, par conséquent, introduire des erreurs dans les mesures. Cela n'empêche pas qu'un autre type d'articulation comme, par exemple, un palier à billes ou un palier équipé d'un roulement à billes, pourrait quand même être utilisé.

De plus, le mouvement de rotation de la touche autour d'un axe pourrait très bien être remplacé par une translation, c'est-à-dire un déplacement de la touche parallèlement à elle-même mais selon une trajectoire qui n'est pas forcément rectiligne. Dans ce cas, les moyens de support de la touche qui lui permettent de se déplacer suivant un degré de liberté pourraient être constitués, par exemple, par un système en forme de parallélogramme déformable à l'un des côtés duquel serait fixée la touche.

En ce qui concerne les moyens qui permettent de déplacer le point d'ancrage du ressort, il n'est pas nécessaire que la manivelle pivote dans un plan parallèle aux faces avant et arrière du boîtier. Par exemple il serait possible, en accrochant de manière convenable le ressort à la touche et en modifiant la position des butées, de monter le moteur sur l'une des faces latérales perpendiculaires à l'axe de rotation de la touche et de faire pivoter le bras de la manivelle dans un plan parallèle à cette face. Dans ce cas il y aurait intérêt à placer le ressort dans le plan de pivotement de la manivelle et de façon qu'il ne soit plus parallèle aux faces avant et arrière du boîtier, pour obtenir le même résultat du point de vue du maintien en place de la manivelle dans ses positions extrêmes.

D'autre part, l'ensemble moteur-démultiplicateur pourrait être remplacé par un autre système d'entraînement, en particulier par un électroaimant, bien que ce dernier présente les inconvénients d'être plus encombrant et de dissiper davantage de chaleur qu'un moteur électrique.

Enfin, beaucoup de moyens, autres qu'une manivelle et un système pour la faire pivoter, pourraient être envisagés pour déplacer le point d'ancrage du ressort, aussi bien des moyens actionnables manuellement que motorisés.

**Revendications**

1. Dispositif pour mesurer la position axiale de pièces à usiner sur une machine-outil, notamment sur une machine à rectifier les surfaces cylindriques extérieures, comprenant une touche de mesure (3) dont une extrémité est destinée à être amenée en contact avec des épaulements desdites pièces ; des moyens (X, 5) pour supporter la touche de mesure de façon qu'elle puisse se déplacer en rotation ou en translation dans un premier plan (P') ; un ressort (7) dont une première extrémité est fixée à un point d'ancrage et dont une seconde extrémité est liée à la touche de mesure, pour exercer sur cette dernière une force de mesure dans le premier plan ; et un capteur (17) pour mesurer les déplacements de ladite touche, caractérisé par le fait qu'il comporte en plus des moyens (8, 11, 15, 16) pour déplacer le point d'ancrage du ressort entre deux positions extrêmes sensiblement symétriques par rapport à un second plan (P) perpendiculaire au premier et que ledit ressort est lié à la touche de manière à pouvoir suivre ce déplacement, afin que le sens de ladite force de mesure puisse être inversé et que ledit dispositif permette d'effectuer des mesures en amenant ladite touche en contact avec des épaulements orientés en sens contraire sans avoir besoin d'être tourné lorsqu'il est monté sur ladite machine.

2. Dispositif selon la revendication 1, caractérisé par le fait que la touche de mesure (7) est portée par un axe (X) situé dans le second plan (P) et sensiblement perpendiculaire au premier (P'), autour duquel elle peut tourner.

3. Dispositif selon la revendication 2, caractérisé par le fait que les moyens de support de la touche de mesure (3) comprennent un palier à lames élastiques croisées (5) placé entre ledit axe (X) et ladite touche.

4. Dispositif selon la revendication 2 ou 3, caractérisé par le fait que la seconde extrémité du ressort (7) est accrochée à la touche de mesure (3) de façon que le ressort puisse tourner autour d'un point d'accrochage sur ladite touche et que les moyens pour déplacer le point d'ancrage du ressort comprennent une manivelle (8) munie d'un maneton (9) sur lequel se trouve ce point d'ancrage et un système d'entraînement (11) pour. faire pivoter la manivelle d'un angle d'environ 180° autour d'un axe (Y) situé dans le second plan (P) et sensiblement parallèle au premier (P'), entre deux positions extrêmes correspondant à celles dudit point d'ancrage.

5. Dispositif selon la revendication 4, caractérisé par le fait que ledit système d'entraînement comprend un moteur électrique réversible (12).

6. Dispositif selon la revendication 5, caractérisé par le fait que ledit système d'entraînement comprend également un démultiplicateur (13) placé entre le moteur électrique (12) et la manivelle (8).

7. Dispositif selon l'une quelconque des revendications 4 à 6, caractérisé par le fait que les moyens pour déplacer le point d'ancrage du ressort comprennent également deux butées fixes (15, 16) qui déterminent lesdites positions extrêmes de la manivelle (8).

8. Dispositif selon la revendication 7, caractérisé par le fait que l'axe de pivotement (Y) de la manivelle (8) est décalé latéralement par rapport au premier plan (P') de façon que le ressort (7) exerce sur la manivelle une force qui permet de la maintenir en contact avec lesdites butées (15, 16) lorsqu'elle occupe ses positions extrêmes.

9. Dispositif selon l'une quelconque des revendications 2 à 8, caractérisé par le fait qu'il est conçu de façon que, lorsque le point d'ancrage du ressort (7) se trouve dans l'une ou l'autre de ses positions extrêmes et lorsque la touche (3) n'est soumise à aucune force extérieure au dispositif, ladite touche soit inclinée par rapport au second plan (P) dans le sens pour lequel son autre extrémité se trouve du même côté de ce plan que le point d'ancrage du ressort.

10. Dispositif selon la revendication 9, caractérisé par le fait que l'angle dont est inclinée la touche (3) par rapport au second plan (P) est compris entre 1° et 3°.

**Claims**

1. A device for measuring the axial position of workpieces on a machine tool, particularly on a machine for grinding external cylindrical surfaces comprising a measurement feeler (3) one end of which is adapted to be brought into contact with shoulders of said pieces ; means (X, 5) for supporting the measurement feeler so it can move in rotation or in translation in a first plane (P') ; a spring (7) having a first end fixed to an anchorage point and a second end connected to the measurement feeler to exert thereon a measuring force in the first plane ; and a sensor (17) for measuring the displacement of said feeler, characterised in that it additionally comprises means (8, 11 15, 16) for moving the anchorage point of the spring between two extreme positions substantially symmetrical in relation to a second plane (P) perpendicular to the first, and that said spring is connected to the feeler in a manner to be able to follow this movement so that the direction of said measuring force may be reversed and that said device enables measurements to be taken by bringing said feeler into contact with shoulders facing in opposite directions without having to be turned around when it is assembled on said machine.

2. The device according to claim 1, characterised by the fact the measurement feeler (7) is carried by an axle (X) situated in the second plane (P) and substantially perpendicular to the first plane (P'), about which it can turn.

3. The device according to claim 2, characterised by the fact that the means for supporting the measurement feeler (3) comprise a bearing (5) with intersecting elastic blades placed between said axle (X) and said feeler.

4. The device according to claim 2 or 3, characterised by the fact that the second end of the spring (7) is attached to the measurement feeler (3) such that the spring may turn about a point attachment on said feeler, and that the means for moving the anchorage point of the spring comprise a crank (8) provided with a pin (9) on which is located this anchorage point and a drive system (11) for pivoting the crank by an angle of about 180° about an axis (Y) situated in the second plane (P) and substantially parallel to the first plane (P'), between two extreme positions which correspond to those of said anchorage point.

5. The device according to claim 4, characterised by the fact that said drive system comprises a reversible electric motor (12).

6. The device according to claim 5, characterised by the fact that said drive system also comprises a gear reduction train (13) placed between the electric motor (12) and the crank (8).

7. The device according to any one of claims 4 to 6, characterised by the fact that the means for moving the anchorage point of the spring also comprise two fixed abutments (15, 16) which determine said extreme positions of the crank (8).

8. The device according to claim 7 characterised by the fact that the pivotal axis (Y) of the crank (8) is offset laterally in relation to the first plane (P') such that the spring (7) exerts on the crank a force which allows it to be maintained in contact with said abutments (15, 16) when it is in its extreme positions.

9. The device according to any one of claims 2 to 8, characterised by the fact that it is designed so that when the anchorage point of the spring (7) is in one or the other of its extreme positions and when the feeler (3) is submitted to no force external to the device, said feeler is inclined in relation to the second plane (P) in the direction for which its other end is on the same side of this plane as the anchorage point of the spring.

10. The device according to claim 9. characterised by the fact that the angle of inclination of the feeler (3) in relation to the second plane (P) is comprised between 1° and 3°.

**Patentansprüche**

1. Vorrichtung zum Messen der axialen Position eines auf einer Werkzeugmaschine zu bearbeitenden Werkstücks, insbesondere auf einer Aussenrundschleifmaschine, umfassend einen Messtaster (3), dessen eines Ende bei der Messung mit Schultern der genannten Werkstücke in Kontakt gebracht wird ; Mittel (X, 5) zur Halterung des Messtasters, die derart gestaltet sind, dass der Messtaster sich drehend oder auslenkend in einer ersten Ebene (P') bewegen kann ; eine Feder (7), deren eines Ende an einem Ankerpunkt befestigt und deren zweites Ende mit dem Messtaster verbunden ist, um auf diesen eine Messkraft in einer ersten Ebene auszuüben ; und einen Messwertaufnehmer (17) zum Messen der Verstellungen des genannten Tasters, dadurch gekennzeichnet, dass sie ferner Mittel (8, 11, 15, 16) umfasst, um den Ankerpunkt der Feder zwischen zwei in bezug auf eine rechtwinklig zur ersten Ebene liegende zweite Ebene (P) symmetrisch verlaufenden Endlagen zu verstellen, und dass die genannte Feder so mit dem Taster verbunden ist, dass sie dieser Verstellung folgen kann, so dass die Richtung der genannten Messkraft umkehrbar ist und die genannte Vorrichtung das Ausführen von Messungen gestattet, indem der genannte Taster mit gegenläufig ausgerichteten Schultern in Berührung gebracht wird, ohne dabei gewendet werden zu müssen, wenn sie auf der genannten Maschine montiert ist.

2. Vorrichtung gemäss Anspruch 1, dadurch gekennzeichnet, dass der Messtaster (3) auf einer in einer rechtwinklig zur ersten Ebene (P') liegenden zweiten Ebene (P) angeordneten Achse (X) gelagert ist, um die er sich drehen kann.

3. Vorrichtung gemäss Anspruch 1, dadurch gekennzeichnet, dass die Halterungsmittel des Messtasters (3) ein zwischen der genannten Achse (X) und dem genannten Taster angeordnetes elastisches Kreuzfedergelenk (5) umfassen.

4. Vorrichtung gemäss einem der Ansprüche 2 oder 3, dadurch gekennzeichnet, dass das zweite Ende der Feder (7) am Messtaster so angehängt ist, dass sich die Feder um einen Einhängepunkt auf dem genannten Messtaster drehen kann und dass die Mittel zum Verstellen des Federankerpunktes eine Kurbel (8) umfassen, die mit einem Zapfen (9) versehen ist, auf welchem sich dieser Ankerpunkt befindet, und ein Antriebssystem (11), um die Kurbel um einen Winkel von ca. 180° um eine in der zweiten Ebene (P) und rechtwinklig zur ersten Ebene (P') angeordneten Achse (Y) zu schwenken, und zwar zwischen zwei Endlagen, die jenen des genannten Ankerpunktes entsprechen.

5. Vorrichtung gemäss Anspruch 4, dadurch gekennzeichnet, dass das genannte Antriebssystem einen umkehrbaren Elektromotor (12) umfasst.

6. Vorrichtung gemäss Anspruch 5, dadurch gekennzeichnet, dass das genannte Antriebssystem ferner ein zwischen dem Elektromotor (12) und der Kurbel (8) angeordnetes Untersetzungsgetriebe umfasst.

7. Vorrichtung gemäss einem beliebigen der Ansprüche 4 bis 6, dadurch gekennzeichnet, dass die Mittel zum Verstellen des Federankerpunktes ferner zwei feste Anschläge (15, 16) umfassen, die die genannten Endlagen der Kurbel (8) festlegen.

8. Vorrichtung gemäss Anspruch 7, dadurch gekennzeichnet, dass die Schwenkachse (Y) der Kurbel (8) in bezug auf die erste Ebene (P') seitlich so versetzt ist, dass die Feder (7) auf die Kurbel eine Kraft ausübt, die diese in Kontakt mit den genannten Anschlägen (15, 16) hält, wenn sie ihre Endlagen einnimmt.

9. Vorrichtung gemäss einem beliebigen der Ansprüche 2 bis 8, dadurch gekennzeichnet, dass sie so gestaltet ist, dass wenn der Ankerpunkt der Feder (7) sich in der einen oder anderen seiner Endlagen befindet und wenn der Taster (3) von keiner von ausserhalb der Vorrichtung wirkenden Kraft beaufschlagt wird, der genannte Taster in bezug auf die zweite Ebene (P9) in der Richtung geneigt wird, bei der sein anderes Ende sich auf derselben Seite dieser Ebene wie der Ankerpunkt der Feder befindet.

10. Vorrichtung gemäss Anspruch 9, dadurch gekennzeichnet, dass der Winkel, um den der Taster (3) in bezug auf die zweite Ebene (P) geneigt wird, zwischen 1° und 3° beträgt.

Fig.1

Fig.2